# EUROPÄISCHE PATENTSCHRIFT

(11) **EP 1 033 647 B1**
(45) Veröffentlichungstag und Bekanntmachung des Hinweises auf die Patenterteilung: **28.01.2009**
(21) Anmeldenummer: 00104267.0
(22) Anmeldetag: 01.03.2000
(51) Int. Cl.: G06F 9/44, G06F 9/445

(54) **Verfahren zum Übertragen eines Softwaresystems auf andere Hardwareplattformen**
Method for porting a software system to other hardware platforms
Procédé pour la transposition d'un système logiciel vers d'autres plateformes

(30) Priorität: 01.03.1999 DE 19908866
(43) Veröffentlichungstag der Anmeldung: 06.09.2000
(73) Patentinhaber: re start Gesellschaft für back-up Systeme mbH, 30559 Hannover (DE)
(72) Erfinder: Kahle, Arno, 30938 Burgwedel (DE)
(74) Vertreter: Maier, Daniel Oliver

(56) Entgegenhaltungen:
- EP-A- 0 592 079
- WO-A-98/01805
- US-A- 5 613 125
- US-A- 5 640 562

## Beschreibung

Die gegenwärtig stattfindende, schnelle Weiterentwicklung von Computersystemen und deren Peripherieeinrichtungen läßt häufig das Bedürfnis entstehen, Hardwarekomponenten von bestehenden Computersystemen durch modernere und leistungsfähigere Ausführungsformen zu ersetzen. Auch bei einem Ausfall einer oder mehrerer Hardwarekomponenten ist ein Hardwareaustausch meist unumgänglich. Ein solcher Austausch von Hardwarekomponenten erfordert im allgemeinen auch eine entsprechende Anpassung eines auf dem Computersystem installierten Softwaresystems. Bei einer größeren Umstrukturierung der Hardwareplattform, wie z.B. bei einem Austausch von Kernbestandteile des Softwaresystems speichernden Massenspeichersystemen oder einem komplettem Austausch der Hardware, ist allerdings häufig eine vollständige Neuinstallation des Softwaresystems erforderlich.

Ein Hardwarewechsel wird häufig so ausgeführt, daß das Softwaresystem zunächst auf einem Datensicherungs-Speichersystem - im Fachjargon auch als Backup-System bezeichnet - gespeichert wird und von dort auf eine geänderte oder neue Hardwareplattform übertragen wird. Für den Fall, daß sich die neue Hardwareplattform nicht von der ursprünglichen Hardwareplattform unterscheidet, kann diese Übertragung durch eine vollständige Datensicherung bei der ursprünglichen Hardwareplattform mit anschließender Komplettwiederherstellung auf der neuen Hardwareplattform mittels gängiger Datensicherungsverfahren, wie z.B. dem sogenannten DSSI-Sicherungsverfahren, automatisch durchgeführt werden. Unterscheidet sich die neue Hardwareplattform jedoch wesentlich von der ursprünglichen, ist durch solche Verfahren im allgemeinen keine automatische Übertragung und Installation des Softwaresystems mehr möglich. Beispielsweise kann schon ein Umstecken einer Steckkarte, z.B. einer SCSI-Steuerkarte, aufgrund einer dadurch bewirkten Änderung von E/A-Adressen eine solche automatische Übertragung und Installation verhindern. In solchen Fällen ist vielmehr eine Neuinstallation des Softwaresystems auf der neuen Hardwareplattform erforderlich, wobei die durch die Hardwareänderung bedingten Anpassungen des Softwaresystems separat durchzuführen und in der Regel sehr zeitaufwendig sind. Dabei besteht zudem eine hohe Wahrescheinlichkeit, daß am Softwaresystem auf der ursprünglichen Hardwareplattform mitunter mit großem Aufwand vorgenommene Benutzer- oder Systemeinstellungen nicht erkannt werden und somit bei der Neuinstallation bzw. Anpassung nicht berücksichtigt werden.

Aus der Druckschrift US 5613125 ist ein Verfahren zum Setzen und Ändern von Hardwareparametern bei laufendem Betriebssystem bekannt. Dabei ist eine Konfigurationsdatei vorgesehen, in der ein Benutzer sog. Hardware-Kontrollvariablen im laufenden Betrieb manuell setzen kann. Das Betriebssystem liest die Konfigurationsdatei und verändert Hardwareeinstellungen entsprechend der Hardware-Kontrollvariablen. Eine Übertragung eines Softwaresystems auf eine andere Hardware-Plattform wird durch dieses Verfahren jedoch nicht unterstützt.

Die Aufgabe der vorliegenden Erfindung besteht darin, ein Verfahren anzugeben, mit dem ein Softwaresystem von einer ersten Hardwareplattform unter Beibehaltung von Benutzer-oder Systemeinstellungen des Softwaresystems mit geringem Aufwand auf eine zweite Hardwareplattform übertragen werden kann.

Gelöst wird diese Aufgabe durch ein Verfahren mit den Merkmalen des Patentanspruchs 1.

Es sei an dieser Stelle darauf hingewiesen, daß die in Patentanspruch 1 angegebene Reihenfolge der Verfahrensschritte nicht notwendigerweise der zeitlichen Abfolge entsprechen muß.

Durch das erfindungsgemäße Verfahren wird ein Softwaresystem, z.B. ein Betriebssystem mit einer Sammlung von Anwendungsprogrammen, von einer ersten auf eine zweite Hardwareplattform übertragen, wobei eine oder mehrere Konfigurationsdateien des Softwaresystems mit hardwareabhängigem Inhalt an die Hardwareumgebung der zweiten Hardwareplattform angepaßt werden. Falls sich die Hardwareumgebungen der ersten und der zweiten Hardwareplattform unterscheiden, wird durch diese automatische Anpassung ein schneller Wiederanlauf des Softwaresystems auf der zweiten Hardwareplattform erzielt.

Da auf der ersten Hardwareplattform zum Softwaresystem gehörige Konfigurationsdateien beim Übertragen des Softwaresystems auf die zweite Hardwareplattform berücksichtigt werden, bleiben in diesen Konfigurationsdateien enthaltene System- und/oder Benutzereinstellungen für das übertragene Softwaresystem in vorteilhafter Weise erhalten. Um möglichst viele System-und/oder Benutzereinstellungen auf der zweiten Hardwareplattform beibehalten zu können, sind sowohl die hardwareabhängigen Konfigurationsdateien als auch die das Softwaresystem mit Anwendungsprogrammen spezifizierenden Konfigurationsdateien auf der ersten Hardwareplattform möglichst vollständig zu erfassen.

Die Anpassung der hardwareabhängigen Konfigurationsdateien erfolgt anhand einer Zuordnung von Hardwareparametern der ersten Hardwareplattform zu funktionell entsprechenden Hardwareparametern der zweiten Hardwareplattform. Hardwareparameter können in diesem Zusammenhang alle die Hardwareumgebung einer jeweiligen Hardwareplattform spezifizierenden Angaben, wie z.B. Typ, Anzahl, Eigenschaften, Steuerparameter oder Geräteadressen von Hardwarekomponenten, sein. Bei der Ermittlung des Hardwareparametersatzes für die erste Hardwareplattform sollten insbesondere die mit Hardwareanforderungen des Softwaresystems zusammenhängenden Hardwareparameter möglichst vollständig erfaßt werden.

Vorteilhafte Ausführungsformen und Weiterbildungen der Erfindung sind in den Unteransprüchen angegeben.

Nach einer vorteilhaften Ausführungsform der Erfindung kann das Softwaresystem beim Speichern abhängig vom Inhalt einer oder mehrerer, gegebenfalls angepaßter Konfigurationsdateien auf dem Massenspeichersystem verteilt werden; beispielsweise anhand einer den Typ und/oder die Anzahl verfügbarer Festplatten beschreibenden Konfigurationsdatei.

Nach dem Speichern des Softwaresystems kann weiterhin ein Neustart des Computersystems durchgeführt werden. Da das Softwaresystem durch einen Neustart anhand von Vorgaben in Konfigurationsdateien konfiguriert wird, werden so eventuelle Änderungen in diesen Konfigurationsdateien vollständig wirksam.

Die Zuordnung von Hardwareparametern der ersten Hardwareplattform zu Hardwareparametern der zweiten Hardwareplattform kann vorteilhafterweise im Hinblick auf eine möglichst optimale Nutzung von Hardwareresourcen der zweiten Hardwareplattform erfolgen. So kann beispielsweise eine einzelne Festplatte der ersten Hardwareplattform mehreren parallel ansprechbaren Festplatten auf der zweiten Hardwareplattform zugeordnet werden, um dadurch höhere Datenübertragungsraten zu erzielen.

Um eine Erkennung von Konfigurationsdateien auf der zweiten Hardwareplattform zu erleichtern, kann auf der ersten Hardwareplattform eine Konfigurationsdateien kennzeichnende Information gebildet und zur zweiten Hardwareplattform übertragen werden. Zu demselben Zweck können die Konfigurationsdateien auf der ersten Hardwareplattform auch separat vom restlichen Softwaresystem erfaßt und zur zweiten Hardwareplattform übertragen werden. Insbesondere können auf diese Weise hardwareabhängige Konfigurationsdateien gekennzeichnet bzw. separat übertragen werden.

Nach einer weiteren vorteilhaften Ausführungsform der Erfindung werden Computerprogramme, wie z.B. ein Installationsprogramm, und/oder Daten, wie z.B. ein Hardwareparametersatz, die bei der Ausführung des erfindungsgemäßen Verfahrens auf der zweiten Hardwareplattform verwendet werden oder diese Ausführung begünstigen, mit dem Softwaresystem von der ersten auf die zweite Hardwareplattform übertragen.

Gemäß einer weiteren Ausführungsform der Erfindung werden von der ersten auf die zweite Hardwareplattform zu übertragende Daten, wie z.B. das Softwaresystem, ein oder mehrere Hardwareparametersätze, Installationsprogramme etc., auf einem Datensicherungs-Speichersystem gespeichert und von dort auf die zweite Hardwareplattform übertragen. Werden auf diese Weise alle wesentlichen auf die zweite Hardwareplattform zu übertragenden Daten zunächst auf dem Datensicherungs-Speichersystem gespeichert, kann das erfindungsgemäße Verfahren insbesondere als Datensicherungsverfahren verwendet werden, bei dem zwischen einem Sichern und einem Wiedereinspielen des Softwaresystems auch ein Wechsel der Hardwareplattform zulässig ist.

Zur Übertragung des Softwaresystems auf die zweite Hardwareplattform kann auf dieser ein Installationsprogramm ausgeführt werden. Dieses besteht vorzugsweise aus einem Minimalsystem, das auf möglichst vielen Hardwareplattformen auch ohne installiertes Softwaresystem lauffähig ist. Um auf eine Konfigurationsdatei und/oder auf einen Massenspeicherbereich, z.B. ein temporäres Arbeitsverzeichnis auf einer Festplatte, zugreifen zu können, kann vom Installationsprogram zeitweilig eine Dateisystemhierarchie auf der zweiten Hardwareplattform geändert werden. Beispielsweise kann ein temporäres Arbeitsverzeichnis einer tieferen Hierarchieebene, die vor Installation des Softwaresystems nicht zugänglich ist, zeitweilig als Wurzelverzeichnis, d.h. als hierarchisch höchststehendes Verzeichnis, eingeordnet und auf diese Weise zugänglich gemacht werden.

Nach einer vorteilhaften Weiterbildung der Erfindung kann eine spezifische Meldung ausgegeben werden, wenn die Zuordnung der Hardwareparameter der ersten Hardwareplattform zu denen der zweiten Hardwareplattform mißlingt. Die Meldung kann vorzugsweise die nicht zuordenbaren Hardwareparameter und/oder die jeweils betroffenen Hardwarekomponenten angeben. Durch das Ausgeben derart spezifischer Hinweise wird ein Einleiten gezielter Gegenmaßnahmen wesentlich erleichtert.

Ein Ausführungsbeispiel der Erfindung wird nachfolgend anhand der Zeichnung näher erläutert.

Dabei zeigen
Fig 1 zwei unterschiedliche Hardwareplattformen in schematischer Darstellung und
Fig 2 zwei Hardwareparametersätze, die jeweils eine Hardwareplattform funktionell spezifizieren, und eine Zuordnungstabelle, in der Hardwareparameter verschiedener Hardwareplattformen einander funktionell zugeordnet sind.

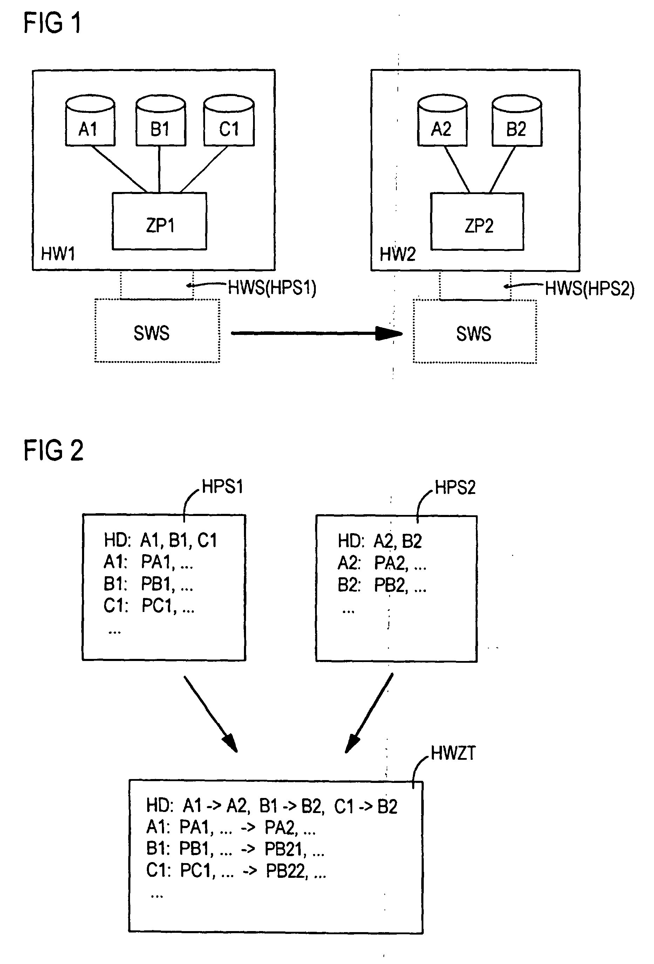

In Fig 1 sind zwei unterschiedliche Hardwareplattformen HW1 und HW2 schematisch dargestellt, wobei die Hardwareplattform HW1 eine zentrale Prozessoreinheit ZP1 und daran angeschlossene Festplatten A1, B1 und C1 und die Hardwareplattform HW2 eine zentrale Prozessoreinheit ZP2 und daran angeschlossene Festplatten A2 und B2 aufweist.

Die für das Ausführungsbeispiel gewählte Hardwarekonfiguration ist hier lediglich als beispielhaft anzusehen und soll der Vereinfachung der Beschreibung des Ausführungsbeispiels dienen.

Auf der Hardwareplattform HW1 ist ein Softwaresystem SWS, z.B. ein Betriebssystem mit einer Sammlung von Anwendungsprogrammen, lauffähig implementiert. Ein Zugriff des Softwaresystems SWS auf Hardwarekomponenten der Hardwareplattform HW1 erfolgt dabei über einen Satz von Software/Hardware-Schnittstellen. Eine solche Software/Hardware-Schnittstelle kann beispielsweise als eine Systemroutine implementiert sein, die zur Steuerung einer Hardwarekomponente auf eine dafür vorgesehene Hardwareadresse zugreift. Software/Hardware-Schnittstellen sind im allgemeinen abhängig von der jeweils eingesetzten Hardware. So erfordern z.B. Typ, Anzahl und Betriebsart eingesetzter Peripheriegeräte, wie Netzwerkkarten, ISDN-Karten, Backup-Laufwerke, Festplatten etc., in der Regel eine spezifische Konfiguration der betreffenden Software/Hardware-Schnittstelle. Bei Festplatten sind in diesem Zusammenhang beispielsweise neben Festplattengeometrie und Geräteadressen gegebenenfalls auch mit einer Spiegelung, SCSI-Systemen oder Raidsystemen zusammenhängende Parameter zu berücksichtigen. Hardwareabhängige Parameter zur Konfiguration einer Software/Hardware-Schnittstelle sind meist in Konfigurationsdateien des Softwaresystems hinterlegt, um beim Systemhochlauf gelesen und zur Initialisierung der betreffenden Software/Hardware-Schnittstelle verwendet zu werden. Daneben können Hardwareparameter aber auch fest in System- oder Anwendungsprogrammen eingebunden (eincompiliert) sein.

Der vollständige Satz von Software/Hardware-Schnittstellen zwischen Softwaresystem SWS und Hardware wird aus Gründen der Übersichtlichkeit im folgenden als eine einzige hardwareabhängige Schnittstelle HWS betrachtet. Die Hardwareabhängigkeit der Schnittstelle HWS wird dabei durch einen Satz von Hardwareparametern beschrieben, der auf der Hardwareplattform HW1 durch einen Hardwareparametersatz HPS1 gegeben ist.

Im Ausführungsbeispiel ist das auf der Hardwareplattform HW1 lauffähig installierte Softwaresystem SWS - wie durch einen Pfeil in Fig 1 angedeutet - auf die Hardwareplattform HW2 zu übertragen. Die hardwareabhängige Schnittstelle HWS ist dabei an die Hardwareumgebung der Hardwareplattform HW2 anzupassen, d.h. mittels eines die Hardwareplattform HW2 spezifizierenden Hardwareparametersatzes HPS2 zu konfigurieren.

Vor der Übertragung des Softwaresystems SWS wird auf der Hardwareplattform HW1 zunächst eine Datei erzeugt, die den die Hardwareumgebung der Hardwareplattform HW1 funktionell spezifizierenden Hardwareparametersatz HPS1 enthält. Diese Datei wird anschließend zusammen mit dem Softwaresystem, allen Konfigurationsdateien und einem auch ohne installiertes Softwaresystem lauffähigen Installationsprogramm auf einem Datensicherungs-Speichersystem, wie z.B. einem Bandlaufwerk, (nicht dargestellt) gespeichert, um von dort auf die Hardwareplattform HW2 übertragen zu werden.

Zur Übertragung des Softwaresystems auf die Hardwareplattform HW2 wird zunächst das Installationsprogramm vom Datensicherungs-Speichersystem in einen Arbeitsspeicher der Hardwareplattform HW2 übertragen und dort ausgeführt. Das Installationsprogramm bestimmt daraufhin durch Sondieren der Hardwareumgebung der Hardwareplattform HW2 einen diese Hardwareumgebung funktionell spezifizierenden Hardwareparametersatz HPS2. Die darin spezifizierten Hardwareparameter werden anschließend mit den Hardwareparametern des Hardwareparametersatzes HPS1 hinsichtlich ihrer jeweiligen Funktion verglichen. Auf der Grundlage dieses Vergleichs wird sodann eine Zuordnung ermittelt, durch die den einzelnen Hardwareparametern des Hardwareparametersatzes HPS1 funktionell äquivalente Hardwareparameter für die Hardwareplattform HW2 zugeordnet werden.

Fig 2 zeigt die für das vorliegende Ausführungsbeispiel wesentlichen Elemente der Hardwareparametersätze HPS1 und HPS2. Die darin enthaltenen Hardwareparameter sind jeweils nach ihrer Funktion geordnet dargestellt. Beide Hardwareparametersätze HPS1, HPS2 enthalten jeweils einen Eintrag HD für die im System vorhanden Festplatten. Im Hardwareparametersatz HPS1 sind an dieser Stelle die Festplatten A1, B1 und C1 und im Hardwareparametersatz HPS2 die Festplatten A2 und B2 eingetragen. Zu jeder eingetragenen Festplatte sind im betreffenden Hardwareparametersatz HPS1, HPS2 weiterhin die jeweilige Festplatte und/oder deren Systemanbindung spezifizierende Parametersätze eingetragen. Im Hardwareparametersatz HPS1 sind so für die Festplatten A1, B1 und C1 in dieser Reihenfolge die Parametersätze PA1,... und PB1,... und PC1,... und im Hardwareparametersatz HPS2 für die Festplatten A2 und B2 die Parametersätze PA2,... und PB2,... eingetragen. Die den Festplatten zugeordneten Parametersätze umfassen dabei alle für einen Betrieb einer jeweiligen Festplatte in der Software- und Hardwareumgebung der jeweiligen Hardwareplattform erforderlichen Parameter, wie z.B. Typ, Portadressen, Geometrie, Füllungsgrad, Zugriffszeit, Datenübertragungsrate, Partitionierungsdaten oder ähnliche Betriebs- und Steuerparameter der Festplatte.

Den im Hardwareparametersatz HPS1 enthaltenen Hardwareparametern werden anhand des Hardwareparametersatzes HPS2 funktionell äquivalente Hardwareparameter für die Hardwareplattform HW2 zugeordnet. Die ermittelten Zuordnungen werden in einer ebenfalls in Fig 2 dargestellten Zuordnungstabelle HWZT eingetragen. Zuordnungen sind in dieser Darstellung jeweils durch einen Pfeil angedeutet. Zur Ermittlung dieser Zuordnungen werden im vorliegenden Ausführungsbeispiel zunächst die Parametersätze PA1,... und PA2,... verglichen. Da hierbei festgestellt wird, daß der Funktionsumfang der Festplatte A2 den vom Softwaresystem genutzten Funktionsumfang der Festplatte A1 umfaßt, wird die Festplatte A2 der Festplatte A1 sowie der Parametersatz PA2 dem Paramtersatz PA1 zugeordnet. Da weiterhin durch Vergleiche der Parametersätze PB1 und PC1 mit PB2 festgestellt wird, daß die Funktionsanforderungen an die Festplatten B1 und C1 durch die einzelne Festplatte B2 erfüllt werden können, wird den Festplatten B1 und C1 die Festplatte B2 zugeordnet. Den zugehörigen Parametersätzen PB1 und PC1 werden dabei funktionell entsprechende, anhand des Parametersatzes PB2 erzeugte Parametersätze PB21 bzw. PB22 zugeordnet. Die Parametersätze PB21 und PB22 können sich dabei z.B. auf unterschiedliche Partitionen der Festplatte B2 beziehen.

Im vorliegenden Ausführungsbeispiel wird im Interesse einer klaren Darstellung des Erfindungsgedankens nur der Fall betrachtet, daß sich die beiden Hardwareplattformen HW1 und HW2 in der Anzahl der angeschlossenen Festplatten unterscheiden. Das Ausführungsbeispiel läßt sich jedoch unschwer auf Hardwareplattformen verallgemeinern, deren Hardware sich auch in anderer Hinsicht unterscheidet.

Beispielsweise kann neben einer Neuzuweisung von Portadressen für Festplatten, Bandlaufwerke und andere Peripheriegeräte auch eine komplette Neuverteilung von Dateisystemen auf Massenspeichersysteme vorgenommen werden, wobei neben geänderten Festplattengeometrien auch mit einer Spiegelung, SCSI- oder Raidsystemen zusammenhängende Parameter berücksichtigt werden.

Nach Erstellung der Zuordnungstabelle HWZT werden die in hardwareabhängigen Konfigurationsdateien des Softwaresystems enthaltenen Hardwareparameter des Hardwareparametersatzes HPS1 durch die diesen jeweils zugeordneten Hardwareparameter für die Hardwareplattform HW2 ersetzt. Die hardwareabhängigen Konfigurationsdateien werden dadurch;an die Hardwareumgebung der Hardwareplattform HW2 angepaßt. Anschließend wird die Hardwareplattform HW2 abhängig vom Inhalt der Konfigurationsdateien konfiguriert. Im vorliegenden Ausführungsbeispiel werden dazu die Festplatten A2 und B2 partitioniert, wobei auf der Festplatte B2 zwei den Festplatten B1 und C1 entsprechende Partitionen angelegt werden. Auf den erstellten Partitionen werden daraufhin die Dateisysteme des Softwaresystems angelegt und in eine Dateisystemhierarchie eingebunden. Die Dateisystemhierarchie kann dabei vom Installationsprogramm noch zeitweilig geändert werden, um dadurch auf Konfigurationsdateien und/oder auf einen Massenspeicherbereich, z.B. ein temporäres Arbeitsverzeichnis auf einer Festplatte, zugreifen zu können.

Im Anschluß daran wird das Softwaresystem mit dem Betriebssystem und weiteren Konfigurationsdateien vom Datensicherungs-Speichersystem auf die Festplatten A2 und B2 der Hardwareplattform HW2 übertragen. Gegebenenfalls werden anhand von Vorgaben in Konfigurationsdatein noch weitere, zum Betrieb der Hardwareplattform HW2 erforderliche Treiberprogramme installiert. Falls sich der übertragene Betriebssystemkern auf der Hardwareplattform HW2 als nicht lauffähig erweist, wird ferner ein neuer Betriebssystemkern anhand der Konfigurationsdateien erzeugt und installiert. Auf diese Weise können auch fest in den Betriebssystemkern eingebundene (eincompilierte) Hardwareparameter an die Hardwareplattform HW2 angepaßt werden.

Schließlich wird ein Systemneustart durchgeführt, wodurch das Softwaresystem Kontrolle über die Hardwareplattform HW2 erlangt und noch diejenigen Teile des Softwaresystems konfiguriert werden können, die erst nach dessen Inbetriebnahme konfigurierbar sind.

## Patentansprüche

1. Verfahren zum Übertragen eines Softwaresystems (SWS) von einer ersten Hardwareplattform (HW1) auf eine zweite Hardwareplattform (HW2), bei dem
a) für die erste Hardwareplattform (HW1) ein erster funktionsorientierter Hardwareparametersatz (HPS1) und für die zweite Hardwareplattform (HW2) ein die zweite Hardwareplattform funktionell spezifizierender, zweiter Hardwareparametersatz (HPS2) ermittelt werden,
b) Hardwareparameter des ersten Hardwareparametersatzes(HPS1) mit Hardwareparametern des zweiten Hardwareparametersatzes (HPS2) hinsichtlich ihrer jeweiligen Funktion verglichen werden,
c) die Hardwareparameter des ersten Hardwareparametersatzes (HPS1) funktionell entsprechenden Hardwareparametern des zweiten Hardwareparametersatzes (HPS2) zugeordnet werden,
d) in mindestens einer Konfigurationsdatei des Softwaresystems (SWS) spezifizierte Hardwareparameter des ersten Hardwareparametersatzes (HPS1) durch die jeweils zugeordneten Hardwareparameter des zweiten Hardwareparametersatzes (HPS2) ersetzt werden,
e) die zweite Hardwareplattform (HW2) abhängig vom Inhalt der mindestens einen Konfigurationsdatei konfiguriert wird, und
f) das Softwaresystem (SWS) auf einem Massenspeichersystem (A2, B2) der zweiten Hardwareplattform (HW2) gespeichert wird.

2. Verfahren nach Anspruch 1,
**dadurch gekennzeichnet,**
**daß** das Softwaresystem (SWS) in einer vom Inhalt einer Konfigurationsdatei abhängigen Verteilung auf dem Massenspeichersystem (A2, B2) gespeichert wird.

3. Verfahren nach Anspruch 1 oder 2,
**dadurch gekennzeichnet,**
**daß** nach dem Speichern des Softwaresystems (SWS) ein Systemneustart durchgeführt wird.

4. Verfahren nach einem der vorhergehenden Ansprüche,
**dadurch gekennzeichnet,**
**daß** die Zuordnung der Hardwareparameter mit dem Ziel einer möglichst optimalen Nutzung von Systemresourcen der

5. Verfahren nach einem der vorhergehenden Ansprüche,
**dadurch gekennzeichnet,**
**daß** auf der ersten Hardwareplattform (HW1) eine Konfigurationsdateien bezeichnende Information gebildet und zur zweiten Hardwareplattform (HW2) übertragen wird, um dort zur Erkennung von Konfigurationsdateien verwendet zu werden.

6. Verfahren nach einem der vorhergehenden Ansprüche,
**dadurch gekennzeichnet,**
**daß** Konfigurationsdateien getrennt vom restlichen Softwaresystem (SWS) von der ersten Hardwareplattform (HW1) auf die zweite Hardwareplattform (HW2) übertragen werden.

7. Verfahren nach einem der vorhergehenden Ansprüche,
**dadurch gekennzeichnet,**
**daß** mit dem Softwaresystem (SWS) auch ein bei Durchführung des Verfahrens zu verwendendes Computerprogramm von der ersten Hardwareplattform (HW1) auf die zweite Hardwareplattform (HW2) übertragen wird.

8. Verfahren nach einem der vorhergehenden Ansprüche,
**dadurch gekennzeichnet,**
**daß** mit dem Softwaresystem (SWS) auch ein zum Ermitteln eines funktionsorientierten Hardwareparametersatzes dienendes Computerprogramm von der ersten Hardwareplattform (HW1) auf die zweite Hardwareplattform (HW2) übertragen wird und dort einen funktionsorientierten Hardwareparametersatz (HPS2) für die zweite Hardwareplattform (HW2) ermittelt.

9. Verfahren nach einem der vorhergehenden Ansprüche,
**dadurch gekennzeichnet,**
**daß** der für die erste Hardwareplattform (HW1) ermittelte Hardwareparametersatz (HPS1) von der ersten zur zweiten Hardwareplattform übertragen wird.

10. Verfahren nach einem der vorhergehenden Ansprüche,
**dadurch gekennzeichnet,**
**daß** anhand der mindestens einen Konfigurationsdatei ein neuer Betriebssystemkern für die zweite Hardwareplattform (HW2) erzeugt wird.

11. Verfahren nach einem der vorhergehenden Ansprüche,
**dadurch gekennzeichnet,**
**daß** abhängig von der mindestens einen Konfigurationsdatei zusätzliche Treiberprogramme auf der zweiten Hardwareplattform (HW2) installiert werden.

12. Verfahren nach einem der vorhergehenden Ansprüche,
**dadurch gekennzeichnet,**
**daß** die Übertragung des Softwaresystems (SWS) von der ersten Hardwareplattform (HW1) auf die zweite Hardwareplattform (HW2) unter Zwischenspeicherung auf einem Datensicherungs-Speichersystem erfolgt.

13. Verfahren nach einem der vorhergehenden Ansprüche,
**dadurch gekennzeichnet,**
**daß** der für die erste Hardwareplattform (HW1) ermittelte Hardwareparametersatz (HPS1) unter Zwischenspeicherung auf einem Datensicherungs-Speichersystem von der ersten Hardwareplattform (HW1) auf die zweite Hardwareplattform (HW2) übertragen wird.

14. Verfahren nach einem der vorhergehenden Ansprüche,
**dadurch gekennzeichnet,**
**daß** zur Übertragung des Softwaresystems (SWS) auf die zweite Hardwareplattform (HW2) ein Installationsprogramm mit Zugriff auf Hardwarekomponenten der zweiten Hardwareplattform (HW2) und auf mindestens eine Konfigurationsdatei des Softwaresystems (SWS) ausgeführt wird.

15. Verfahren nach Anspruch 14,
**dadurch gekennzeichnet,**
**daß** vom Installationsprogramm, um auf mindestens eine Konfigurationsdatei und/oder einen Massenspeicherbereich zugreifen zu können, temporär eine Dateisystemhierarchie auf der zweiten Hardwareplattform (HW2) geändert wird.

16. Verfahren nach einem der vorhergehenden Ansprüche,
**dadurch gekennzeichnet,**
**daß** eine Meldung ausgegeben wird, falls die Zuordnung der Hardwareparameter der ersten Hardwareplattform (HW1) zu Hardwareparametern der zweiten Hardwareplattform (HW2) mißlingt.

17. Verfahren nach Anspruch 16,
**dadurch gekennzeichnet,**
**daß** durch eine Ausgabe der Meldung ein Aufruf eines Computerprogrammes zur interaktiven Zuordnung von Hardwareparametern veranlaßt wird.

## Claims

1. Method for porting a software system (SWS) from a first hardware platform (HW1) to a second hardware platform (HW2), in which
a) For the first hardware platform (HW1) a first function-oriented hardware parameter set (HPS1) and for the second hardware platform (HW2) a second hardware parameter set (HPS2) specifying the functions of the second hardware platform are determined,
b) Hardware parameters of the first hardware parameter set (HPS1) are compared with hardware parameters of the second hardware parameter set (HPS2) as regards their respective function,
c) The hardware parameters of the first hardware parameter set (HPS1) are assigned to functionally-equivalent hardware parameters of the second hardware parameter set (HPS2),
d) Hardware parameters of the first hardware parameter set (HPS1) specified in at least one configuration file of the software system (SWS) are replaced by the respective assigned hardware parameters of the second hardware parameter set (HPS2),
e) The second hardware platform (HW2) is configured depending on the contents of the at least one configuration file, and
f) The software system (SWS) is stored on a mass storage system (A2, B2) of the second hardware platform (HW2).

2. Method according to claim 1,
**characterised in that**,
the software system (SWS) is stored on the mass storage system (A2, B2) in a distribution which depends on the content of a configuration file.

3. Method according to claim 1 or 2,
**characterised in that**,
after the storage of the software system (SWS) the system is restarted.

4. Method according to one of the previous claims,
**characterised in that**,
the assignment of the hardware parameters is optimized with the objective of an optimum possible use of system resources of the second hardware platform (HW2).

5. Method according to one of the previous claims,
**characterised in that**,
information identifying configuration files is formed on the first hardware platform (HW1) and transmitted to the second hardware platform (HW2) in order to be used there for identification of configuration files.

6. Method according to one of the previous claims,
**characterised in that**,
configuration files are transmitted separated from the remainder of the software system (SWS) from the first hardware platform (HW1) to the second hardware platform (HW2).

7. Method according to one of the previous claims,
**characterised in that**,
a computer program to be used for execution of the method is also ported along with the software system (SWS) from the first hardware platform (HW1) to the second hardware platform (HW2).

8. Method according to one of the previous claims,
**characterised in that**,
a computer program serving to determine a function-oriented hardware parameter set is also ported from the first hardware platform (HW1) to the second hardware platform (HW2) along with the software system (SWS) and on this platform determines a function-oriented hardware parameter set (HPS2) for the second hardware platform (HW2).

9. Method according to one of the previous claims,
**characterised in that**,
the hardware parameter set (HPS1) determined for the first hardware platform (HW1) is ported from the first to the second hardware platform.

10. Method according to one of the previous claims,
**characterised in that**,
on the basis of the at least one configuration file a new operating system kernel is created for the second hardware platform (HW2).

11. Method according to one of the previous claims,
**characterised in that**,
depending on the at least one configuration file additional driver programs are installed on the second hardware platform (HW2).

12. Method according to one of the previous claims,
**characterised in that**,
the software system (SWS) is ported from the first hardware platform (HW1) to the second hardware platform (HW2) by buffering it on a data backup storage system.

13. Method according to one of the previous claims,
**characterised in that**,
the hardware parameter set (HPS1) determined for the first hardware platform (HW1) is ported from the first hardware platform (HW1) to the second hardware platform (HW2) by buffering it on a data backup storage system.

14. Method according to one of the previous claims,
**characterised in that**,
for porting the software system (SWS) onto the second hardware platform (HW2) an installation program with access to hardware components of the second hardware platform (HW2) and to at least one configuration file of the software system (SWS) is executed.

15. Method according to claim 14,
**characterised in that**
in order to be able to access at least one configuration file and/or a mass storage area, a file system hierarchy is temporarily modified on the second hardware platform (HW2).

16. Method according to one of the previous claims,
**characterised in that**
a message is output if the assignment of the hardware parameters of the first hardware platform (HW1) to hardware parameters of the second hardware platform (HW2) does not succeed.

17. Method according to claim 16,
**characterised in that**
the output of the message causes a computer program product to be called for interactive assignment of hardware parameters.

## Revendications

1. Procédé de transfert d'un système logiciel (SWS) d'une première plate-forme matérielle (HW1) vers une deuxième plate-forme matérielle (HW2), dans lequel
a) pour la première plate-forme matérielle (HW1), sont déterminés un premier jeu de paramètres matériels orienté fonction (HPS1) et, pour la deuxième plate-forme matérielle (HW2) sont déterminés un deuxième jeu de paramètres matériels (HPS2) spécifiant la deuxième plate-forme matérielle sur le plan fonctionnel,
b) des paramètres matériels du premier jeu de paramètres matériels (HPS1) sont comparés avec des paramètres matériels du deuxième jeu de paramètres matériels (HPS2) au regard de leur fonction respective,
c) les paramètres matériels du premier jeu de paramètres matériels (HPS1) sont associés, sur le plan fonctionnel, à des paramètres matériels correspondants du deuxième jeu de paramètres matériels (HPS2),
d) des paramètres matériels du premier jeu de paramètres matériels (HPS1), spécifiés dans au moins un fichier de configuration du système logiciel (SWS), sont remplacés par les paramètres matériels du deuxième jeu de paramètres matériels (HPS2) qui sont respectivement associés,
e) la deuxième plate-forme matérielle (HW2) est configurée en fonction du contenu de l'au moins un fichier de configuration et
f) le système logiciel (SWS) est stocké sur un système de mémoire de masse (A2, B2) de la deuxième plate-forme matérielle (HW2).

2. Procédé selon la revendication 1, **caractérisé en ce que** le système logiciel (SWS) est stocké sur le système de mémoire de masse (A2, B2) selon une distribution qui dépend du contenu d'un fichier de configuration.

3. Procédé selon la revendication 1 ou 2, **caractérisé en ce qu'**un relancement du système est effectué après le stockage du système logiciel (SWS).

4. Procédé selon l'une des revendications précédentes, **caractérisé en ce que** l'association des paramètres matériels est optimisée dans le but d'une utilisation aussi optimale que possible de ressources système de la deuxième plate-forme matérielle (HW2).

5. Procédé selon l'une des revendications précédentes, **caractérisé en ce qu'**une information désignant des fichiers de configuration est constituée sur la première plate-forme matérielle (HW1) et est transférée vers la deuxième plate-forme matérielle (HW2) pour y être utilisée aux fins de la reconnaissance de fichiers de configuration.

6. Procédé selon l'une des revendications précédentes, **caractérisé en ce que** les fichiers de configuration sont transférés séparément du reste du système logiciel (SWS) de la première plate-forme matérielle (HW1) vers la deuxième plate-forme matérielle (HW2).

7. Procédé selon l'une des revendications précédentes, **caractérisé en ce qu'**est également transféré de la première plate-forme matérielle (HW1) vers la deuxième plate-forme matérielle (HW2), avec le système logiciel (SWS), un programme informatique à utiliser lors de l'exécution du procédé.

8. Procédé selon l'une des revendications précédentes, **caractérisé en ce qu'**un programme informatique servant à déterminer un jeu de paramètres matériels orienté fonction est également transféré, avec le système logiciel (SWS), de la première plate-forme matérielle (HW1) vers la deuxième plate-forme matérielle (HW2) et détermine là un jeu de paramètres matériels (HPS2) orienté fonction pour la deuxième plate-forme matérielle (HW2).

9. Procédé selon l'une des revendications précédentes, **caractérisé en ce que** le jeu de paramètres matériels (HPS1) déterminé pour la première plate-forme matérielle (HW1) est transféré de la première vers la deuxième plate-forme matérielle.

10. Procédé selon l'une des revendications précédentes, **caractérisé en ce qu'**est généré, à l'aide de l'au moins un fichier de configuration, un nouveau noyau de système d'exploitation pour la deuxième plate-forme matérielle (HW2).

11. Procédé selon l'une des revendications précédentes, **caractérisé en ce que** des programmes pilotes supplémentaires sont installés sur la deuxième plate-forme matérielle (HW2) en fonction de l'au moins un fichier de configuration.

12. Procédé selon l'une des revendications précédentes, **caractérisé en ce que** le transfert du système logiciel (SWS) de la première plate-forme matérielle (HW1) vers la deuxième plate-forme matérielle (HW2) a lieu avec stockage intermédiaire sur un système de mémoire de sauvegarde des données.

13. Procédé selon l'une des revendications précédentes, **caractérisé en ce que** le jeu de paramètres matériels (HPS1) déterminé pour la première plate-forme matérielle (HW1) est transféré de la première plate-forme matérielle (HW1) vers la deuxième plate-forme matérielle (HW2) avec stockage intermédiaire sur un système de mémoire de sauvegarde des données.

14. Procédé selon l'une des revendications précédentes, **caractérisé en ce qu'**est exécuté, aux fins du transfert du système logiciel (SWS) sur la deuxième plate-forme matérielle (HW2), un programme d'installation avec accès à des composantes matérielles de la deuxième plate-forme matérielle (HW2) et à au moins un fichier de configuration du système logiciel (SWS).

15. Procédé selon la revendication 14, **caractérisé en ce qu'**une hiérarchie du système de fichiers est modifiée temporairement, sur la deuxième plate-forme matérielle (HW2), par le programme d'installation pour pouvoir accéder à au moins un fichier de configuration et/ou une zone de mémoire de masse.

16. Procédé selon l'une des revendications précédentes, **caractérisé en ce qu'**un message est émis au cas où l'association des paramètres matériels de la première plate-forme matérielle (HW1) à des paramètres matériels de la deuxième plate-forme matérielle (HW2) ne réussit pas.

17. Procédé selon la revendication 16, **caractérisé en ce qu'**est provoqué, par une émission du message, un appel d'un programme informatique pour l'association interactive de paramètres matériels.
